# EUROPÄISCHE PATENTSCHRIFT

(11) **EP 3 514 211 B1**
(45) Veröffentlichungstag und Bekanntmachung des Hinweises auf die Patenterteilung: **04.01.2023**
(21) Anmeldenummer: 18206552.4
(22) Anmeldetag: 15.11.2018
(51) Int. Cl.: C09J 7/21, B60R 16/02, D03D 13/00, D03D 1/00, D03D 15/283

(54) **ABRIEBFESTES KLEBEBAND**
ABRASION-RESISTANT ADHESIVE TAPE
RUBAN ABRASIF RÉSISTANT À L'USURE

(30) Priorität: 17.01.2018 DE 202018100248 U
(43) Veröffentlichungstag der Anmeldung: 24.07.2019
(73) Patentinhaber: certoplast Technische Klebebänder GmbH, 42285 Wuppertal (DE)
(72) Erfinder: RAMBUSCH, René, 42113 Wuppertal (DE); LEERMANN, Timo, 42369 Wuppertal (DE)
(74) Vertreter: Andrejewski - Honke Patent- und Rechtsanwälte Partnerschaft mbB

(56) Entgegenhaltungen:
- EP-A1- 2 298 845
- EP-A1- 2 520 629
- EP-A2- 2 157 147
- DE-U1-202017 103 893
- JP-A- H08 144 149
- US-A1- 2010 227 102
- US-A1- 2010 313 989
- US-A1- 2012 132 309

## Beschreibung

Die Erfindung betrifft die Verwendung eines abriebfesten Wickelbandes zum Ummanteln von Kabeln in Automobilen, wobei das Wickelband mit einem bandförmigen Gewebeträger aus Kettfäden und Schussfäden und mit einer zumindest einseitigen Klebebeschichtung ausgerüstet ist, und wobei die Fäden jeweils aus Polyester oder Polyamid mit einer Fadenfeinheit von wenigstens 40 dtex hergestellt sind.

Derartige Klebebänder und insbesondere Wickelbänder werden im Automobilbereich eingesetzt, um Kabel zu ummanteln bzw. umwickeln und auf diese Weise unterschiedliche Kabelsätze herstellen zu können. Neben dieser gleichsam zusammenfassenden Funktion kommen solchen textilen Klebebändern Zusatzfunktionen zu. Außerdem müssen solche Klebebänder temperaturstabil im Hinblick auf die bei Anwendungen im Automobilbereich herrschenden Temperaturen von beispielsweise -40°C bis +80°C ausgelegt sein. Hinzukommt eine ausreichende Medienbeständigkeit gegenüber beispielsweise Öl und Benzin, die erfüllt sein muss. Darüber hinaus kommt es darauf an, die Kabel vor Abrieb zu schützen und möglichst Klapper- oder Vibrationsgeräusche zu dämpfen.

Sofern abriebfeste Klebebänder betrachtet werden, handelt es sich im Rahmen der vorliegenden Anmeldung um solche, die zumindest die Abriebklasse C und regelmäßig die Abriebklasse D nach der Norm LV312 "Klebebänder für Kabelsätze in Kraftfahrzeugen" (1/2005) als gemeinsame Prüfrichtlinie der Firmen Audi, BMW, Daimler und VW erfüllen. Die fragliche Abriebbeständigkeit nach LV312 wird in Anlehnung an DIN ISO 6722 bestimmt, indem das zu prüfende Klebeband zunächst auf einen Dorn (Metallstab) mit 5 mm oder 10 mm Durchmesser aufgeklebt wird. Mit einem Schabwerkzeug mit einem Nadeldurchmesser von 0,45 mm wird dann unter Beaufschlagung mit einer Gewichtskraft von 7 N die Anzahl der Hübe bestimmt, die benötigt wird, um das Klebeband durchzuscheuern.

Jedenfalls werden als abriebfeste Klebebänder im Rahmen der vorliegenden Anmeldung solche bezeichnet, welche zumindest die Abriebklasse C, in der Regel die Abriebklasse D und meistens sogar die Abriebklasse E an einem Dorn mit 5 mm Durchmesser ebenso wie an einem Dorn mit 10 mm Durchmesser gemäß der LV312 erfüllen. Weitere Einzelheiten zur Messung der Abriebbeständigkeit und der Einteilung in die unterschiedlichen Abriebklassen werden beispielhaft in der gattungsbildenden EP 1 911 633 B1 beschrieben. Hier geht es um ein Kabelwickelband, bei dem der Gewebeträger aus einer einzigen aus einem Gewebe gebildeten Schicht besteht. Als Gewebe kommt ein Garn aus einem Polyamidwerkstoff zum Einsatz, dessen Garnstärke bzw. Fadenstärke oder Fadenfeinheit mindestens 280 dtex aufweist. Derartige Garne sind einerseits aufgrund der erforderlichen Garnstärke und andererseits im Hinblick auf das geforderte Material (Polyamid) relativ teuer und kostenaufwendig. Zwar soll an dieser Stelle insgesamt die Abriebklasse E gemäß LV312 erfüllt werden. Allerdings ist der hiermit verbundene Aufwand beträchtlich.

Im Rahmen der ebenfalls gattungsgemäßen WO 2017/198398 A1 der Anmelderin wird in Weiterentwicklung der Lehre nach der EP 1 911 633 B1 das Ziel verfolgt, einerseits eine hohe Abriebbeständigkeit und andererseits dennoch die für die Verarbeitung der Klebebänder erforderliche Handeinreißbarkeit zur Verfügung zu stellen. Denn das Klebeband nach der EP 1 911 633 B1 lässt sich nicht von Hand einreißen.

Aus diesem Grund schlägt die WO2017/198398 A1 ein Kabelwickelband vor, bei welchem die Schussfäden eine Feinheit von mehr als 200 dtex und die Kettfäden eine Feinheit von 40 dtex bis 100 dtex aufweisen. Die Schussfäden sind insgesamt hochzugfest ausgebildet und verfügen über eine feinheitsbezogene Höchstzugkraft von mehr als 5 cN/dtex. Auf diese Weise werden sowohl die erforderliche Abriebfestigkeit als auch Handeinreißbarkeit zur Verfügung gestellt.

Einen anderen Ansatz verfolgt die ebenfalls im Großen und Ganzen gattungsgemäße Lehre nach der EP 3 190 163 A1 der Anmelderin. Hier wird erneut mit speziell ausgelegten Schussfäden gearbeitet. Denn die Schussfäden verfügen über eine Zwirnung dergestalt, dass diese mit mehr als 180 Drehungen pro Meter Schussfaden verdreht sind. Das hat sich grundsätzlich bewährt, erfordert jedoch einen zusätzlichen Vorgang zum Zwirnen der an dieser Stelle eingesetzten Filamentfäden.

Der nächstkommende Stand der Technik wird in der EP 2 520 629 A1 beschrieben. Hier geht es um ein Verfahren zur Herstellung eines Klebebandes zum Umwickeln von Kabeln. Dabei kann als textiler Träger ein Gewebe und vorzugsweise ein Polyestergewebe zum Einsatz kommen. Die Garnfeinheit in Kettrichtung beträgt 40 bis 180 dtex. Für die Garnfeinheit in Schussrichtung werden 100 bis 400 dtex angegeben. Außerdem kann der Schusseintrag als Einfach- und/oder Mehrfachschuss ausgebildet sein.

Der Erfindung liegt das technische Problem zugrunde, eine Verwendung der vorerwähnten Ausprägung so weiterzuentwickeln, dass das Wickelband möglichst handeinreißbar gestaltet ist und hinsichtlich der erforderlichen Herstellungskosten Vorteile gegenüber bisherigen Ausführungsformen bringt.

Zur Lösung dieser technischen Problemstellung ist die Verwendung nach Anspruch 1 vorgesehen.

Tatsächlich macht die Erfindung zunächst einmal von einem speziellen Gewebeaufbau Gebrauch. Denn an dieser Stelle kommen im Gewebe jeweils Mehrfachfäden, d. h. Mehrfachschussfäden und/oder Mehrfachkettfäden, zum Einsatz. Solche Mehrfachfäden und insbesondere Mehrfachschussfäden lassen sich grundsätzlich in ein Gewebe mit einem modifizierten Webstuhl einbringen, wie dies schon seit langem bekannt ist und beispielhaft in der DE 1 710 320 A1 näher beschrieben wird. Hier sind jeweils Speicherglieder zur vorübergehenden Aufnahme der einzelnen Schussfäden vorgesehen. Mit Hilfe eines Druckmittels lassen sich die Schussfäden aus Düsen jeweils in das von den Kettfäden gebildete Fach austreiben.

Auf diese Weise lassen sich bei einem erfindungsgemäßen Gewebe mit Einfachkettfäden zwei Schussfäden in ein Fach der Kettfäden einwerfen. Neben einer solchen Auslegung mit Doppelschussfäden als einfachster Form der Mehrfachschussfäden sind natürlich auch nicht erfindungsgemäße Ausgestaltungen mit mehr als zwei Schussfäden beispielsweise mit bis zu 10 Schussfäden (oder noch mehr) denkbar. Die einzelnen Schussfäden des jeweiligen Mehrfachschussfadens verlaufen dabei jeweils parallel zueinander und ohne gegenseitige Beeinflussung bzw. mechanische Verbindung miteinander. Auf diese Weise kann mit relativ "dünnen" Schussfäden gearbeitet werden und lassen sich dennoch signifikante Abriebfestigkeiten des erfindungsgemäßen Klebebandes erreichen, nämlich indem beispielhaft mit den Mehrfachschussfäden gearbeitet wird.

Tatsächlich hat es sich im Rahmen der Erfindung als besonders günstig erwiesen, wenn der Gewebeträger aus Einfachkettfäden und Mehrfachschussfäden, nämlich Doppelschussfäden, zusammengesetzt ist. Dadurch trägt die Erfindung dem Umstand Rechnung, dass die erforderliche Abriebfestigkeit zumindest der Klasse C nach LV312 bereits dann erreicht wird, wenn beispielsweise mit wenigstens Doppelschussfäden und Einfachkettfäden der jeweils angegebenen Fadenfeinheiten bzw. Fadenstärken gearbeitet wird. Denn dadurch, dass die Fäden jeweils eine Fadenfeinheit von wenigstens 40 dtex aufweisen, verfügen beispielsweise Doppelschussfäden bereits über eine Fadenstärke bzw. Fadenfeinheit von 80 dtex. Bei Dreifachschussfäden wird eine Fadenstärke von wenigstens 120 dtex und bei Vierfachschussfäden beispielhaft eine solche von 160 dtex beobachtet.

Die Einfachkettfäden mögen demgegenüber mit einer Fadenstärke von wenigstens 100 dtex arbeiten. Diese Auslegung sorgt zugleich dafür, dass in gewissen Grenzen das auf diese Weise hergestellte abriebfeste Klebeband dennoch handeinreißbar ist bzw. noch handeinreißbar gestaltet werden kann. Denn bei einem solchen Vorgang des Handeinreißens lassen sich aufgrund der Auslegung der Kettfäden als Einfachkettfäden Reißkräfte in Richtung der Schussfäden zum Zerreißen der Kettfäden von in etwa 10 N/cm Breite in Querrichtung darstellen. Denn die Fadenstärke bzw. Fadenfeinheit der Einfachkettfäden beträgt im Beispielfall wenigstens 100 dtex. Demgegenüber können die Schussfäden mit einer größeren Fadenstärke bzw. Fadenfeinheit von 120 dtex, 160 dtex usw. ausgerüstet werden. Auf diese Weise sorgen die Dreifachschussfäden bzw. Vierfachschussfäden im Beispielfall primär für die gewünschte Abriebfestigkeit, ähnlich wie dies bei dem Kabelwickelband mit den hochzugfesten Schussfäden entsprechend der WO2017/198398 A1 oder auch im Rahmen der Lehre nach der EP 3 190 163 A1 durch die an dieser Stelle verzwirnen Schussfäden beobachtet wird.

Da die Realisierung solcher Mehrfachschussfäden bei der Herstellung eines entsprechenden Gewebes besonders kostengünstig umgesetzt werden kann, lassen sich erfindungsgemäß einerseits die erforderliche Abriebfestigkeit wenigstens der Klasse C nach LV312 an einem 5 mm Dorn und 10 mm Dorn erreichen und andererseits mit einer noch gegebenen Handeinreißbarkeit bei zugleich geringen Herstellungskosten kombinieren. Hinzu kommt, dass die eingesetzten Fäden aus Polyester oder Polyamid die übrigen Anforderungen hinsichtlich Temperatur- und Medienbeständigkeit originär erfüllen, so dass ein Klebeband mit besonders vorteilhaften Wirkungen zur Verfügung gestellt wird.

Hierzu gehört auch, dass im Regelfall die Fäden materialeinheitlich ausgebildet sind, d. h. die Kettfäden und Schussfäden entweder aus Polyester oder aus Polyamid hergestellt werden. Dadurch lässt sich das abriebfeste Klebeband zugleich einfach recyceln. Grundsätzlich kann natürlich auch mit materialunterschiedlichen Fäden gearbeitet werden, beispielsweise mit Kettfäden aus Polyester und Schussfäden aus Polyamid oder umgekehrt. Es ist sogar denkbar, dass die Kettfäden abwechselnd aus Polyester und Polyamid hergestellt sind. Vergleichbares mag für die Schussfäden gelten.

Gewebeträger mit Mehrfachschussfäden werden bereits in der Praxis in Verbindung mit der Herstellung von Airbaggeweben eingesetzt, wie dies die DE 10 2005 022 587 A1 belegt. Allerdings ist der dortige Gewebeaufbau kompliziert und zeichnet sich auch dadurch aus, dass sowohl Einfachschussfäden als auch Mehrfachschussfäden in ein und demselben Gewebe zur Anwendung kommen. Demgegenüber arbeitet die Erfindung durchweg mit jeweils gleicher Anzahl für die Kettfäden und die Schussfäden. Das heißt, sofern an dieser Stelle und vorteilhaft mit Einfachkettfäden und Mehrfachschussfäden für die Realisierung des Gewebeträgers gearbeitet wird, kommen beispielsweise ausschließlich Doppelschussfäden, Dreifachschussfäden, Vierfachschussfäden usw. zum Einsatz. Das heißt, die Anzahl der Schussfäden je Schuss wird nicht variiert, obwohl dies prinzipiell auch möglich ist. Denn für das erfindungsgemäße abriebfeste Klebeband wird ein Gewebeträger mit durchgängig gleichen Eigenschaften gefordert, der darüber hinaus besonders kostengünstig produziert werden kann. Aus diesem Grund wird mit jeweils gleicher Anzahl für die Mehrfachschussfäden im Gewebeträger für jeden Schuss gearbeitet.

Um insgesamt besonders hohe Abriebfestigkeit und zumindest die Abriebklasse D nach LV 312 sowohl an einem 5 mm-Dorn als auch an einem 10 mm-Dorn zu erreichen, verfügen die Einfachkettfäden bei der vorteilhaften Ausgestaltung im Allgemeinen über eine Fadenstärke von wenigstens 200 dtex. Insbesondere können die Einfachkettfäden auch mit einer Fadenstärke von 400 dtex und mehr ausgerüstet sein. Beispielsweise mag die Erfindung auf jeweils Kettfäden mit einer Fadenstärke bzw. Fadenfeinheit von 470 dtex zurückgreifen. Dabei sind die jeweiligen Kettfäden aus beispielsweise 40 bis 80 Filamenten zusammengesetzt. Vorzugsweise kommen in diesem Zusammenhang 68 Filamente zum Einsatz.

Die Einfachkettfäden sind im Allgemeinen aus Polyamid hergestellt. Hier hat sich insbesondere Polyamid (PA) 66 als besonders günstig erwiesen, also ein entsprechend mit dem Kurzzeichen PA 66 nach ISO 1043 / DIN 7728 klassifizierter Polyamidwerkstoff. Bei den Mehrfachschussfäden handelt es sich erfindungsgemäß um Doppelschussfäden, also zwei jeweils parallel zueinander verlaufende Schussfäden, die nicht mechanisch miteinander oder sonst wie verbunden sind.

Die jeweiligen Mehrfachschussfäden verfügen jeweils über eine Fadenstärke bzw. Fadenfeinheit von 80 dtex (Doppelschussfaden) bzw. 120 dtex (Dreifachschussfaden), 160 dtex (Vierfachschussfaden) usw. Denn für den einzelnen Schussfaden gilt, dass dieser eine Fadenfeinheit von wenigstens 40 dtex aufweist. Außerdem empfiehlt die Erfindung, dass die Mehrfachschussfäden jeweils eine Fadenstärke von maximal 250 dtex aufweisen. Tatsächlich arbeitet man meistens mit einer Fadenstärke für die einzelnen Schussfäden des Mehrfachschussfadens von 235 dtex. Der betreffende Schussfaden des Mehrfachschussfadens mag aus beispielsweise 30 bis 60 Filamenten bestehen. Jedenfalls stellt die zuvor angegebene maximale Grenze von 250 dtex für den einzelnen Schussfaden sicher, dass die fraglichen Schussfäden bei der Herstellung des Gewebes nach wie vor und unverändert problemlos verarbeitet und wie beschrieben in die Kammern der Kettfäden eingeschossen werden können.

Für die Herstellung der Mehrfachschussfäden empfiehlt die Erfindung als Werkstoff Polyamid. Grundsätzlich kann natürlich auch mit Polyester gearbeitet werden, wie dies bereits beschrieben wurde. Auch Mischformen sind denkbar.

Im Gewebeträger sind im Allgemeinen 10 Kettfäden/cm bis 50 Kettfäden/cm realisiert. Meistens haben sich an dieser Stelle 20 Kettfäden/cm als besonders günstig erwiesen. Für die Anzahl der Schussfäden im Gewebeträger werden 10 Schussfäden pro cm bis 80 Schussfäden pro cm empfohlen. Sofern jeweils Doppelschussfäden zum Einsatz kommen, bedeutet dies, dass der Gewebeträger mit 5 Doppelschussfäden/cm bis 40 Doppelschussfäden/cm in diesem Fall ausgerüstet ist. Denn die 5 Doppelschussfäden/cm korrespondieren zu 10 einzelnen Schussfäden/cm, während 40 Doppelschussfäden/cm zu 80 einzelnen Schussfäden/cm gehören, wenn man jeden einzelnen Schussfaden zählt.

Das Flächengewicht des Gewebeträgers ist im Allgemeinen zwischen 150 g/m² und 250 g/m² angesiedelt. Meistens wird man hier mit Flächengewichten im Bereich von ca. 185 g/m² arbeiten. Um die Herstellungskosten besonders gering zu halten, besteht der Gewebeträger erfindungsgemäß aus der einzigen Gewebeschicht. Neben dieser einzigen Gewebeschicht ist darüber hinaus nur noch die Klebebeschichtung vorgesehen, welche als einseitig auf den Gewebeträger aufgebrachte selbstklebende Haftklebeschicht ausgebildet ist. Die fragliche Klebebeschichtung wird in der Regel aus einem Kleber auf Acrylatbasis hergestellt. Dies kann durch bekannte Beschichtungstechniken wie beispielsweise eine Düsenbeschichtung, eine Curtain-Coating-Beschichtung usw. erfolgen. Das spezifische Flächengewicht der Klebebeschichtung bzw. des Haftklebstoffes auf dem Gewebeträger ist im Allgemeinen im Bereich zwischen 50 g/m² bis 200 g/m² angesiedelt.

Insgesamt lässt sich auf diese Weise ein abriebfestes Klebeband realisieren, welches zumindest die Abriebklasse C nach LV 312 an einem 5 mm-Dorn und einem 10 mm-Dorn erreicht. Im Regelfall wird sogar die Abriebklasse D erreicht. Je nach Auslegung und gewählter Fadenstärke für die Kettfäden bzw. Schussfäden und auch je nach Anzahl der einzelnen parallelen Schussfäden bei der Realisierung des jeweiligen Mehrfachschussfadens können auch Abriebbeständigkeiten bis zur Klasse E erreicht werden. Das alles gelingt unter Berücksichtigung eines besonders kostengünstigen Aufbaus. Außerdem ist bis zu einem gewissen Grad auch noch die Handeinreißbarkeit des erfindungsgemäßen abriebfesten Klebebandes gegeben. Hierin sind die wesentlichen Vorteile zu sehen.

## Patentansprüche

1. Verwendung eines abriebfesten Wickelbandes zumindest der Abriebklasse C nach LV312 an einem 5 mm-Dorn und einem 10 mm-Dorn zum Ummanteln von Kabeln in Automobilen, wobei
das Wickelband mit einem bandförmigen Gewebeträger aus Kettfäden und Schussfäden und mit einer zumindest einseitigen Klebebeschichtung ausgerüstet ist, wobei ferner
die Fäden jeweils aus Polyester oder Polyamid mit einer Fadenfeinheit von wenigstens 40 dtex hergestellt sind, wobei weiter
der Gewebeträger aus einer einzigen Gewebeschicht besteht sowie aus Mehrfachschussfäden jeweils einer Fadenstärke von max. 250 dtex und/oder Mehrfachkettfäden aufgebaut ist, und wobei
sich der Gewebeträger aus Einfachkettfäden und Doppelschussfäden zusammensetzt.

2. Verwendung nach Anspruch 1, **dadurch gekennzeichnet, dass** die Einfachkettfäden eine Fadenstärke von wenigstens 200 dtex, insbesondere von 400 dtex und mehr aufweisen.

3. Verwendung nach Anspruch 1 oder 2, **dadurch gekennzeichnet, dass** die Einfachkettfäden aus Polyamid hergestellt sind.

4. Verwendung nach einem der Ansprüche 1 bis 3, **dadurch gekennzeichnet, dass** die Mehrfachschussfäden jeweils aus Polyamid hergestellt sind.

5. Verwendung nach einem der Ansprüche 1 bis 4, **dadurch gekennzeichnet, dass** 10 bis 50 Kettfäden/cm im Gewebeträger realisiert sind.

6. Verwendung nach einem der Ansprüche 1 bis 5, **dadurch gekennzeichnet, dass** 10 bis 80 Schussfäden/cm im Gewebeträger realisiert sind.

7. Verwendung nach Anspruch 6, **dadurch gekennzeichnet, dass** die 10 bis 80 Schussfäden/cm zu 5 bis 40 Doppelschussfäden/cm im Gewebeträger korrespondieren.

8. Verwendung nach einem der Ansprüche 1 bis 7, **dadurch gekennzeichnet, dass** das Flächengewicht des Gewebeträgers zwischen 150 g/m² und 250 g/m² angesiedelt ist.

9. Verwendung nach einem der Ansprüche 1 bis 8, **dadurch gekennzeichnet, dass** die Klebebeschichtung als einseitig auf den Gewebeträger aufgebrachte selbstklebende Haftklebeschicht ausgebildet ist.

10. Verwendung nach einem der Ansprüche 1 bis 9, **dadurch gekennzeichnet, dass** die Klebebeschichtung aus einem Kleber auf Acrylatbasis hergestellt ist.

## Claims

1. Use of an abrasion-resistant wrapping tape conforming to at least abrasion resistance class C according to LV312 on a 5 mm mandrel and a 10 mm mandrel for wrapping cables in automobiles, wherein
the wrapping tape is equipped with a strip-like textile support of warp threads and weft threads and with an adhesive coating at least on one side thereof, wherein further
the threads are each produced from polyester or polyamide with a thread fineness of at least 40 dtex, wherein further
the textile support is constructed from a single textile layer and multi-weft threads each having a decitex of max. 250 dtex and/or multi-warp threads, and wherein
the textile support is constituted of single warp threads and double weft threads.

2. Use according to Claim 1, **characterized in that** the single warp threads have a decitex of at least 200 dtex, in particular 400 dtex and more.

3. Use according to Claim 1 or 2, **characterized in that** the single warp threads are produced from polyamide.

4. Use according to any one of Claims 1 to 3, **characterized in that** the multi-weft threads are each produced from polyamide.

5. Use according to any one of Claims 1 to 4, **characterized in that** the textile support comprises 10 to 50 warp threads/cm.

6. Use according to any one of Claims 1 to 5, **characterized in that** the textile support comprises 10 to 80 weft threads/cm.

7. Use according to Claim 6, **characterized in that** the 10 to 80 weft threads per cm correspond to 5 to 40 double weft threads/cm in the textile support.

8. Use according to any one of Claims 1 to 7, **characterized in that** the fabric weight of the textile support is situated between 150 g/m² and 250 g/m².

9. Use according to any one of Claims 1 to 8, **characterized in that** the adhesive coating is designed as a selfadhesive contact adhesive layer applied to one side of the support textile.

10. Use according to any one of Claims 1 to 9, **characterized in that** the adhesive coating is produced from an acrylate-based adhesive.

## Revendications

1. Utilisation d'une bande d'enroulement résistante à l'abrasion au moins de la Classe d'abrasion C selon LV312 sur un mandrin de 5 mm et un mandrin de 10 mm pour envelopper des câbles dans le secteur automobile, sachant que
la bande d'enroulement est dotée d'un support tissé en forme de bande composée de fils de chaîne et de fils de trame et au moins d'un revêtement d'adhésif unilatéral, sachant en plus que
les fils sont respectivement réalisés en polyester ou polyamide avec une finesse de fil d'au moins 40 dtex, sachant par ailleurs que
le support tissé est composé d'une couche de tissu unique et est constitué de fils de trame multiples respectivement d'une épaisseur de fil de 250 dtex maximum et/ou de fils de chaîne multiples et sachant que
le support tissé est composé de fils de chaîne simples et de fils de trame doubles.

2. Utilisation selon la revendication 1, **caractérisée en ce que** les fils de chaîne simples comportent une épaisseur de fil d'au moins 200 dtex, en particulier de 400 dtex et plus.

3. Utilisation selon la revendication 1 ou 2, **caractérisée en ce que** les fils de chaîne simples sont réalisés en polyamide.

4. Utilisation selon l'une quelconque des revendications 1 à 3, **caractérisée en ce que** les fils de trame multiples sont respectivement réalisés en polyamide.

5. Utilisation selon l'une quelconque des revendications 1 à 4, **caractérisée en ce que** 10 à 50 fils de chaîne/cm sont réalisés dans le support tissé.

6. Utilisation selon l'une quelconque des revendications 1 à 5, **caractérisée en ce que** 10 à 80 fils de trame/cm sont réalisés dans le support tissé.

7. Utilisation selon la revendication 6, **caractérisée en ce que** les 10 à 80 fils de trame/cm correspondent aux 5 à 40 fils de trame doubles/cm dans le support tissé.

8. Utilisation selon l'une quelconque des revendications 1 à 7, **caractérisée en ce que** le grammage du support tissé est établi entre 150 g/m² et 250 g/m².

9. Utilisation selon l'une quelconque des revendications 1 à 8, **caractérisée en ce que** le revêtement adhésif est constitué sous la forme d'une couche de colle autoadhésive appliquée unilatéralement sur le support tissé.

10. Utilisation selon l'une quelconque des revendications 1 à 9, **caractérisée en ce que** le revêtement adhésif est réalisé à partir d'une colle à base d'acrylate.
